# EUROPEAN PATENT APPLICATION

(11) **EP 4 036 279 A1**
(43) Date of publication of application: **03.08.2022**
(21) Application number: 20869470.3
(22) Date of filing: 25.08.2020
(51) Int. Cl.: C25C 3/08, C25C 7/02, B05D 1/00, B05D 7/24

(54) **METHOD FOR PROTECTING CATHODE BLOCKS OF ALUMINIUM ELECTROLYZERS HAVING PREBAKED ANODES, PROTECTIVE COMPOSITION AND COATING**

(30) Priority: 24.09.2019 RU 2019130350
(71) Applicant: Obshchestvo s Ogranichennoy Otvetstvennost'yu "Obedinennaya Kompaniya Rusal Inzhenerno- Tekhnologicheskiy Tsentr", Krasnoyarsk 660111 (RU)
(72) Inventor: NAGIBIN, Gennadij Efimovich, g. Krasnoyarsk, 660111 (RU); FEDOROVA, Elena Nikolaevna, g. Krasnoyarsk, 660111 (RU); DOBROSMYSLOV, Sergej Sergeevich, g. Krasnoyarsk, 660111 (RU); KIRILLOVA, Irina Anatol'evna, g. Krasnoyarsk, 660111 (RU); ZAVADYAK, Andrej Vasil'evich, g. Krasnoyarsk, 660111 (RU); PUZANOV, Il'ya Ivanovich, g. Krasnoyarsk, 660111 (RU)
(74) Representative: Tobiasz-Dumania, Katarzyna
(86) International application number: PCT/RU2020/050199
(87) International publication number: WO 2021/061014

(57) **Abstract**

What is proposed is a method for protecting cathode blocks of aluminium electrolyzers having prebaked anodes, the method comprising providing a mixture of a refractory material with a binder, applying said mixture as a coating on the surface of the cathode blocks giving consideration to the cell bottom wear profile, and drying said coating. As the refractory material, use is made of a bimodal or polymodal mixture of titanium diboride powders or titanium diboride powder, the granulometric composition of which has a bimodal or polymodal particle size distribution. As the binder, use is made of sulfonated reaction products of naphthalene with formaldehyde having a coke residue of at least 30% by weight; after drying, a layer of graphite powder is applied to the coating surface as protection against oxidizing during commissioning, thus forming, upon heating of the cell bottom, an aluminium-wettable TiB₂-C composite coating.

## Description

### Field of the invention

The invention relates to the field of non-ferrous metallurgy, namely, to the electrowinning of aluminium, and can be used to protect the cathode blocks of aluminium reduction cells with baked anodes (BA) to reduce the wear of cathode blocks and extend the service life.

### Background of the invention

The modern aluminium industry requires an increase in the power of reduction cells, which require bottom blocks with increased resistance to the aggressive environment of the bath, high thermal and electrical conductivity. In order to meet the above requirements, electrode manufacturers are switching to the production of graphitised and graphite bottom blocks, the use of which increases the service life of reduction cells. However, in traditionally used industrial baths, aluminium does not wet the bottom material, which leads to the formation of a layer of molten metal on the surface of the cathode material. This significantly increases the interpolar distance and current consumption. In addition, the degree of wetting depends on the intensity of impregnation of the bottom with bath that penetrates under the metal layer and impregnates the bottom during the post-start period. The penetration of bath and metallic aluminium into cracks and large pores of cathode blocks is one of the reasons for the low strength of the surface layer and low wear resistance of the cathode blocks. This problem is most relevant for graphite blocks, which are less resistant to mechanical wear compared to carbon-graphite blocks used earlier. The aluminium-wetted cathode has significant advantages that eliminate these disadvantages.

A method is known for protecting cathode blocks by applying a heat-resistant coating made of a heat-resisting material (application US 20010046605). The method includes the preparation of an aqueous suspension of powdered titanium diboride dispersed in an oxalate complex, applying the suspension coating on the surface and its drying to form a hard heat-resisting surface. The coating is intended for the cathode of a high-temperature cryolitic bath, where during the reduction process, the oxalate complex of the coating is destroyed to form aluminium oxide and 20-30 % hydrated Al₂O₃. At the same time, the aluminium oxalate complex is a complex of oxalic acid and dust containing aluminium oxide in a ratio of 3:1 to 1:1 (70-80 % anhydrous Al₂O₃). The oxalate complex is prepared 4 hours before it is mixed with powdered titanium diboride. The suspension contains 30-90 wt.% titanium diboride (fractions of 5-30 µm) and is a powdered heat-resisting material dispersed in the aluminium oxalate complex. The thickness of the coating may vary between 1-15 mm.

The closest in terms of technical essence and the achieved result is the method of forming protective coatings for carbon-containing components of electrolytic cells in the production of aluminium (patent RU 2257425, C25C3/08, C25C7/02, B05D1/00, B05D7/24 or patent US 6475358). This method of processing the carbon-containing element (cathode) of the reduction cell provides for the preparation of a liquid suspension of a heat-resisting material, for example, for the cathode, use of titanium diboride (TiB₂) dispersed in a mixture of lignosulfonate binder (50 % solution) and phenolic resin is preferable, and applying the suspension as a coating on the surface of the carbon-containing component. The content of the components in the suspension may vary within the following limits, wt.%:
- 20-70 wt.% of titanium diboride;
- 5-40 wt.% of a phenolic polymer (a binder);
- 5-40 wt.% of lignosulfonate solution (50 %).

Some compounds may also contain anthracite in an amount of up to 5 wt.%.

The authors of the invention obtained suspensions in the form of viscous dispersion systems that are sufficiently fluid to apply coatings with a thickness of 1-3 mm on cathode blocks, preferably by spraying with a jet injector. The resulting suspensions can also be applied on the surface in a continuous layer with a brush or a roller. The coatings are dried in the open air at room temperature for 10 hours. Then, the coating surface is covered with a layer of coke (10 cm) and next, the cathode is preheated according to the usual start-up mode. Electrolysis tests for 100 h at 900°C showed that the entire surface of the treated cathode sample was wetted with aluminium and showed no signs of erosion.

The prototype disadvantages are:
- when using a mixture of a lignosulfonate binder and phenolic resin, a low coke residue is formed and the formed protective coating has neither high-temperature mechanical strength, nor wear resistance;
- coatings are applied on the entire surface of the bottom without taking into account the bottom wear profile, which also reduces economic efficiency;
- no operations allowing to adjust shrinkage and cracking of protective coatings are provided.

### Disclosure of the invention

The task of the present invention is to develop a method for protecting the cathode blocks of aluminium reduction cells with baked anodes, as well as a composite mixture and coatings allowing to reduce wear and extend the service life of the cathode blocks of aluminium reduction cells with baked anodes.

The technical result is the solution of the task and an increase in the service life of the reduction cell.

The task is addressed, and the technical result is achieved thanks to the fact that to protect the cathode blocks in order to extend the service life of aluminium reduction cells with baked anodes, according to the proposed invention, the novelty of the method involving the preparation of a composite mixture of a heat-resisting material with a binder, applying the mixture on the surface of the cathode blocks and drying the resulting coating, consists in that the binder is used in the form of sulfonated products of the reaction of naphthalene with formaldehyde with a coke residue of at least 30 wt.%, the heat-resisting material is used in the form of a bimodal or polymodal mixture of titanium diboride powders or titanium diboride powder, the granulometric composition of which is characterised by a bimodal or polymodal particle size distribution, after drying, a layer of graphite powder is applied on the surface of the coating to protect it against oxidation during the start-up process with the formation of a TiB₂-C protective composite coating wetted with aluminium during heating.

Additional distinctive features of the invention contribute to the achievement of the technical result. So, the mixture is prepared with a binder content in an amount of 35-50 wt.% and titanium diboride in an amount of 65-50 wt.%, and is applied on the surface of the cathode blocks in layers by pouring with subsequent levelling with a roller or by spraying. The mixture is applied at least to the area of the greatest wear of the bottom, taking into account the wear profile of the bottom, the mixture is applied locally in the form of strips 500-1,200 mm wide along the sides of the reduction cell to obtain a protective coating with a thickness of 0.8-1 mm. After applying the mixture on the cathode blocks of the reduction cell, the coating is dried in the conditions of a production site at room temperature for at least 8 hours. Graphite powder is applied to the coating surface with a thickness of 15-30 mm. A TiB₂-C protective composite coating is formed when the bottom is heated to 950°C for 48-72 hours. The TiB₂-C protective composite coating contains carbon in an amount of 15-40 wt.%. The mixture is continuously mixed until smooth to prevent the settling of TiB₂ particles and the segregation of the mixture.

The corresponding composite mixture meant for the protection of cathode blocks of aluminium reduction cells with baked anodes with a binder content of 65-50 wt.% and titanium diboride in an amount of 65-50 wt.%, after drying, a layer of graphite powder is applied on the coating surface to protect it against oxidation during the start-up process with the formation of a TiB₂-C protective composite coating wetted with aluminium during heating.

A composite mixture has been also declared meant for obtaining a TiB₂-C protective composite coating of the cathode blocks of aluminium reduction cells with baked anodes, containing TiB₂ in an amount of 65-50 wt.% in the form of a bimodal or polymodal mixture of titanium diboride powders or titanium diboride powder, the granulometric composition of which is characterised by a bimodal or polymodal particle size distribution, and a binder in an amount of 35-50 wt.%, used in the form of sulfonated products of the reaction of naphthalene with formaldehyde with a coke residue of at least 30 wt.%.

TiB₂-C protective composite coatings of the cathode blocks of aluminium reduction cells with baked anodes obtained by the above methods have been also declared. The coatings should preferably contain carbon in an amount of 15-40 wt.%.

### Implementation of the invention

The method includes preliminary determination of the areas of the greatest wear of the bottom (by plotting the bottom wear profile) by known methods and obtaining a TiB₂-C protective composite coating wetted with aluminium.

The TiB₂-C protective composite coating is obtained by mixing a binder with titanium diboride (TiB₂), the granulometric composition of which is characterised by a bimodal or polymodal particle size distribution, until a smooth paste is obtained at the following ratios: 35-50 wt.% of the binder, 65-50 wt.% of TiB₂. As a binder, sulfonated products of the reaction of naphthalene with formaldehyde with a coke residue of at least 30 wt.% are used. As TiB₂, a bimodal or polymodal mixture of titanium diboride powders or titanium diboride powder is used, the granulometric composition of which is characterised by a bimodal or polymodal particle size distribution, which contributes to improving the technological properties, during the preparation of the suspension, and the physical and mechanical properties of the protective coating, namely, reducing shrinkage and eliminating cracking.

During further operations, the compound is continuously mixed until smooth to prevent the settling of TiB₂ particles and the segregation of the mixture. Next, the prepared mixture is applied on the bottom of reduction cell either by pouring followed by levelling the applied mixture with a roller or by spraying. In this case, the mixture is applied locally on the areas of the greatest wear of the bottom in the form of strips with a width of 500-1,200 mm along the sides of the reduction cell. The protective coating thickness layer is 0.8-1 mm. The coating is dried in the conditions of a production site at room temperature for at least 8 hours. Next, a layer of graphite powder with a thickness of 15-30 mm is applied on the surface of the coating to protect it against oxidation during the start-up process.

When the bottom is heated during the start of the reduction cell for 48-72 hours to 950°C, a TiB₂-C composite coating with a carbon concentration of about 15-40 wt.% wetted with aluminium is formed.

The TiB₂-C protective composite coating has high adhesion to the cathode block material, wear resistance, resistance to cracking and is wetted with liquid aluminium, which leads to a decrease in the contact electrical resistance and an increase in chemical resistance at the Al-TiB₂-C border.

An increase in the binder content in the composite mixture of more than 50 wt.% leads to the loss of the required physical and mechanical properties, namely, the properties listed above, as well as to a decrease in the values of apparent density, compressive strength, and to an increase in open porosity and electrical resistivity. Reduction of the binder content to less than 35 wt.% leads to the loss of the technological properties of the composite mixture.

The proposed method, composite mixture and coating were tested by the authors of the present invention on industrial reduction cells with baked anodes. The quality of protective coatings on industrial reduction cells with baked anodes was determined by the wear rate of the coatings by controlling the mass fraction of impurities in crude aluminium, by the value of the voltage drop on the cathode and the current distribution on the steel bars.

The results of the operation of the reduction cells after start-up confirm the absence of degradation of the wetted coating of the bottom and, consequently, the efficiency of the proposed method of protection, as well as the corresponding composite mixture and coating.

### Examples of implementation of the invention

### Example 1

1 kg of titanium diboride powder of a fractional composition of 1-80 µm was loaded into a mixer. Next, a binder was added in the ratio of 50 wt.% TiB₂ in the ratio of 50 wt.%, the binder was mixed until smooth. During further operations, the compound was continuously mixed until smooth to prevent the settling of TiB₂ particles and the segregation of the mixture.

The prepared mixture was applied on a carbon substrate with dimensions of 100x100 mm² and a thickness of 20±2 mm by pouring, then levelled with a spatula or a needle roller. The thickness of the protective coating, depending on the type of tests for determining physical and mechanical properties, was 0.6±0.1 mm, 1 mm, and 10 mm.

The coating was dried at room temperature for no more than 48 hours.

Then the coating was covered with a layer of coke fines and placed in an oven, where it was heated to 950°C for 48 hours, then held at this temperature for 5 hours, as a result of which a TiB₂-C composite coating was formed.

The carbon content in the composite coating was 20 %.

TiB₂-C protective coating material has the following properties: apparent density of 1.98±0.12 g/cm³; compressive strength of 32±3 MPa; open porosity of 30±2 %; electrical resistivity at room temperature of 70±5 microohms·m; thermal expansivity of 5.7±0.5·10⁻⁶κ⁻¹; strength of adhesion to cathode block material of 2±0.5 MPa; wetting angle of <90 degrees.

### Example 2

1 kg of a mixture of titanium diboride powders with a bimodal particle size distribution (dₐᵥ¹ = 2.5 µm and dₐᵥ² = 53 µm) or with a polymodal particle size distribution (containing large, medium and small fractions from 1 to 100 µm) was loaded into a mixer. Next, a binder was added in the ratio of 65 wt.% TiB₂ in the ratio of 35 wt.%, the binder was mixed for 15 minutes until smooth. During further operations, the compound was continuously mixed until smooth to prevent the settling of TiB₂ particles and the segregation of the mixture.

The prepared mixture was applied on a carbon substrate with dimensions of 100x100 mm² and a thickness of 20±2 mm by pouring, then levelled with a spatula or a needle roller. The thickness of the protective coating, depending on the type of tests for determining physical and mechanical properties, was 0.6±0.1 mm, 1 mm, and 10 mm.

The coating was dried at room temperature for no more than 48 hours.

Then the coating was covered with a layer of coke fines and placed in an oven, where it was heated to 950°C for 48 hours, then held at this temperature for 5 hours, as a result of which a TiB₂-C composite coating was formed.

The carbon content in the composite coating was 15 wt.%.

TiB₂-C protective coating material has the following properties: apparent density of 2.2±0.1 g/cm³; compressive strength of 46±2 MPa; porosity of 9±2 %; electrical resistivity at room temperature of 52±5 microohms·m; thermal expansivity of 5.3±0,5·10⁻⁶κ⁻¹; strength of adhesion to cathode block material of 4±0.5 MPa; wetting angle of <90 degrees.

### Example 3

40 kg of titanium diboride powder of a fractional composition of 1-80 µm was loaded into a mixer. Next, a binder was added in the ratio of 50 wt.% TiB₂ in the ratio of 50 wt.%, the binder was mixed until smooth. During further operations, the compound was continuously mixed until smooth to prevent the settling of TiB₂ particles and the segregation of the mixture.

Then the prepared mixture was applied on the bottom of the reduction cell with BA. In this case, the coating was applied locally on the areas of the greatest wear of the bottom in the form of strips with a width of 900 mm along the sides of the reduction cell.

The prepared mixture was applied on the bottom of a high-ampere reduction cell by spraying with a spray gun. The layer thickness was 0.8-1 mm.

The coating is dried in the conditions of a production site at room temperature for 8 hours.

The surface of the coating is covered with a layer of graphite powder 30 mm thick to protect it against oxidation during the start-up process.

During the start-up of the reduction cell, the bottom is heated for 48-72 hours to 950°C, as a result of which a composite coating TiB₂-C wetted with aluminium is formed.

The carbon content in the composite coating is 20 %. The wear rate of the coating was ~2.8+0.5 mm/year.

### Example 4

40 kg of a mixture of titanium diboride powders with a bimodal particle size distribution (dₐᵥ¹ = 2.5 µm and dₐᵥ² = 53 µm) or with a polymodal particle size distribution (containing large, medium and small fractions from 1 to 100 µm) was loaded into a mixer. Next, a binder was added in the ratio of 65 wt.% TiB₂ in the ratio of 35 wt.%, the binder was mixed for 15 minutes until smooth. During further operations, the compound was continuously mixed until smooth to prevent the settling of TiB₂ particles and the segregation of the mixture.

The prepared mixture was applied on the bottom of a high-ampere reduction cell by pouring, then levelled with a roller.

The coating was applied in layers on the areas of the greatest wear of the reduction cell bottom (areas with the maximum current density) in the form of strips 900 mm wide along the sides of the reduction cell. The layer thickness was 0.8-1 mm.

The coating is dried in the conditions of a production site at room temperature for at least 8 hours.

The coating surface is covered with a layer of graphite powder with a thickness of 15-30 mm to protect it against oxidation during the start-up process. During the start-up of the reduction cell, the bottom is heated for 48-72 hours to 950°C, as a result of which a composite coating TiB₂-C wetted with aluminium is formed.

The carbon content in the composite coating was 15 wt.%. The wear rate of the coating was ~2.8±0.5 mm/year.

In accordance with the foregoing description and claims, the scope of legal protection is sought for the following subject matter:
1. A method for the production of a TiB₂-C protective composite coating of the cathode blocks of aluminium reduction cells with baked anodes, including the preparation of a composite mixture of a heat-resisting material with a binder, applying the mixture on the surface of the cathode blocks and drying the coating, *wherein* the binder is used in the form of sulfonated products of the reaction of naphthalene with formaldehyde with a coke residue of at least 30 wt.%, the heat-resisting material is used in the form of a bimodal or polymodal mixture of titanium diboride powders or titanium diboride powder, the granulometric composition of which is characterised by a bimodal or polymodal particle size distribution, after drying, a layer of graphite powder is applied to the surface of the coating to protect it against oxidation during the start-up process with the formation of a TiB₂-C protective composite coating wetted with aluminium during heating of the bottom.
2. The method according to claim 1, *wherein* the mixture is prepared with a binder content in an amount of 35-50 wt.% and titanium diboride in an amount of 65-50 wt.%.
3. The method according to claim 1, *wherein* the mixture is applied to the surface of the cathode blocks in layers by pouring followed by levelling with a roller or by spraying.
4. The method according to claim 1, *wherein* the mixture is applied at least to the area of the greatest wear of the bottom, taking into account the wear profile of the bottom.
5. The method according to claim 1, *wherein* the mixture is applied locally in the form of strips 500-1,200 mm wide along the sides of the reduction cell.
6. The method according to claim 1, *wherein* the mixture is applied to obtain a protective coating with a thickness of 0.8-1 mm.
7. The method according to claim 1, *wherein* after applying the mixture on the cathode blocks of the reduction cell, the coating is dried in the conditions of a production site at room temperature for at least 8 hours.
8. The method according to claim 1, *wherein* graphite powder is applied to the coating surface with a thickness of 15-30 mm.
9. The method according to claim 1, *wherein* the TiB₂-C protective composite coating is formed when the bottom is heated to 950°C for 48-72 hours.
10. The method according to claim 1, *wherein* the TiB₂-C protective composite coating contains carbon in an amount of 15-40 wt.%.
11. The method according to claim 1, *wherein* the mixture is continuously mixed until smooth to prevent the settling of TiB₂ particles and the segregation of the mixture.
12. A method for the production of a TiB₂-C protective composite coating of the cathode blocks of aluminium reduction cells with baked anodes, including the preparation of a composite mixture of a heat-resisting material with a binder, applying the mixture on the surface of the cathode blocks and drying the obtained coating, *wherein* the binder is used in the form of sulfonated products of the reaction of naphthalene with formaldehyde with a coke residue of at least 30 wt.%, the heat-resisting material is used in the form of a bimodal or polymodal mixture of titanium diboride powders or titanium diboride powder, the granulometric composition of which is characterised by a bimodal or polymodal particle size distribution, in this case, the mixture is prepared with a binder content in an amount of 35-50 wt.% and titanium diboride in an amount of 65-50 wt.%, after drying, a layer of graphite powder is applied to the surface of the coating to protect it against oxidation during the start-up process with the formation of a TiB₂-C protective composite coating wetted with aluminium during heating of the bottom,
13. A composite mixture for obtaining a TiB₂-C protective composite coating of the cathode blocks of aluminium reduction cells with baked anodes, containing TiB₂ in an amount of 65-50 wt.%. in the form of a bimodal or polymodal mixture of titanium diboride powders or titanium diboride powder, the granulometric composition of which is characterised by a bimodal or polymodal particle size distribution, and a binder in an amount of 35-50 wt.%, used in the form of sulfonated products of the reaction of naphthalene with formaldehyde with a coke residue of at least 30 wt.%.
14. A TiB₂-C protective composite coating of the cathode blocks of the aluminium reduction cells with baked anodes, characterised by the fact that it is obtained by the method according to any of claims 1-10 and contains carbon in an amount of 15-40 wt.%.
15. A TiB₂-C protective composite coating of the cathode blocks of the aluminium reduction cells with baked anodes, characterised by the fact that it is obtained by the method according to claim 12 and contains carbon in an amount of 15-40 wt.%.

## Claims

1. A method for the production of a TiB₂-C protective composite coating of the cathode blocks of aluminium reduction cells with baked anodes, including the preparation of a composite mixture of a heat-resisting material with a binder, applying the mixture on the surface of the cathode blocks and drying the coating, *wherein* the binder is used in the form of sulfonated products of the reaction of naphthalene with formaldehyde with a coke residue of at least 30 wt.%, the heat-resisting material is used in the form of a bimodal or polymodal mixture of titanium diboride powders or titanium diboride powder, the granulometric composition of which is **characterised by** a bimodal or polymodal particle size distribution, after drying, a layer of graphite powder is applied to the surface of the coating to protect it against oxidation during the start-up process with the formation of a TiB₂-C protective composite coating wetted with aluminium during heating of the bottom.

2. The method according to claim 1, *wherein* the mixture is prepared with a binder content in an amount of 35-50 wt.% and titanium diboride in an amount of 65-50 wt.%.

3. The method according to claim 1, *wherein* the mixture is applied to the surface of the cathode blocks in layers by pouring followed by levelling with a roller or by spraying.

4. The method according to claim 1, *wherein* the mixture is applied at least to the area of the greatest wear of the bottom, taking into account the wear profile of the bottom.

5. The method according to claim 1, *wherein* the mixture is applied locally in the form of strips 500-1,200 mm wide along the sides of the reduction cell.

6. The method according to claim 1, *wherein* the mixture is applied to obtain a protective coating with a thickness of 0.8-1 mm.

7. The method according to claim 1, *wherein* after applying the mixture on the cathode blocks of the reduction cell, the coating is dried in the conditions of a production site at room temperature for at least 8 hours.

8. The method according to claim 1, *wherein* graphite powder is applied to the coating surface with a thickness of 15-30 mm.

9. The method according to claim 1, *wherein* the TiB₂-C protective composite coating is formed when the bottom is heated to 950°C for 48-72 hours.

10. The method according to claim 1, *wherein* the TiB₂-C protective composite coating contains carbon in an amount of 15-40 wt.%.

11. The method according to claim 1, *wherein* the mixture is continuously mixed until smooth to prevent the settling of TiB₂ particles and the segregation of the mixture.

12. A method for the production of a TiB₂-C protective composite coating of the cathode blocks of aluminium reduction cells with baked anodes, including the preparation of a composite mixture of a heat-resisting material with a binder, applying the mixture on the surface of the cathode blocks and drying the obtained coating, *wherein* the binder is used in the form of sulfonated products of the reaction of naphthalene with formaldehyde with a coke residue of at least 30 wt.%, the heat-resisting material is used in the form of a bimodal or polymodal mixture of titanium diboride powders or titanium diboride powder, the granulometric composition of which is **characterised by** a bimodal or polymodal particle size distribution, in this case, the mixture is prepared with a binder content in an amount of 35-50 wt.% and titanium diboride in an amount of 65-50 wt.%, after drying, a layer of graphite powder is applied to the surface of the coating to protect it against oxidation during the start-up process with the formation of a TiB₂-C protective composite coating wetted with aluminium during heating of the bottom,

13. A composite mixture for obtaining a TiB₂-C protective composite coating of the cathode blocks of aluminium reduction cells with baked anodes, containing TiB₂ in an amount of 65-50 wt.%. in the form of a bimodal or polymodal mixture of titanium diboride powders or titanium diboride powder, the granulometric composition of which is **characterised by** a bimodal or polymodal particle size distribution, and a binder in an amount of 35-50 wt.%, used in the form of sulfonated products of the reaction of naphthalene with formaldehyde with a coke residue of at least 30 wt.%.

14. A TiB₂-C protective composite coating of the cathode blocks of the aluminium reduction cells with baked anodes, **characterised by** the fact that it is obtained by the method according to any of claims 1-10 and contains carbon in an amount of 15-40 wt.%.

15. A TiB₂-C protective composite coating of the cathode blocks of the aluminium reduction cells with baked anodes, **characterised by** the fact that it is obtained by the method according to claim 12 and contains carbon in an amount of 15-40 wt.%.
